Europäisches Patentamt

European Patent Office

Office européen des brevets

(19)

(11) EP 0 884 621 A2

# (12) EUROPEAN PATENT APPLICATION

(43) Date of publication:
16.12.1998 Bulletin 1998/51

(51) Int Cl.6: G02F 1/1335, G02B 5/30, G04G 9/00

(21) Application number: 98304567.5

(22) Date of filing: 09.06.1998

(84) Designated Contracting States:
AT BE CH CY DE DK ES FI FR GB GR IE IT LI LU MC NL PT SE
Designated Extension States:
AL LT LV MK RO SI

(30) Priority: 09.06.1997 JP 150954/97
09.06.1997 JP 150955/97
04.11.1997 JP 302252/97

(71) Applicant: Seiko Epson Corporation
Shinjuku-ku, Tokyo 163-0811 (JP)

(72) Inventors:
• Miyazawa, Eiichi
Suwa-shi, Nagano-ken 392-8502 (JP)
• Chiba, Satoshi
Suwa-shi, Nagano-ken 392-8502 (JP)
• Matsui, Tsuyoshi
Suwa-shi, Nagano-ken 392-8502 (JP)

(74) Representative: Sturt, Clifford Mark et al
Miller Sturt Kenyon
9 John Street
London WC1N 2ES (GB)

## (54) Electronic watch

(57) To diversify the mode of display for numeric information and the like in an electronic watch that presents the information using the natural ambient light or a back light. An electronic watch includes a polarizer 11 for transmitting a light ray linearly polarized in one direction while absorbing the remaining polarized light rays, a liquid crystal element 8 that selects a state in which the polarization axis of a polarized light ray is varied through transmission and a state in which the polarization axis of the polarized light ray is not varied, a polarizing splitter filter film 12, opposed to the polarizer 11 with the liquid crystal element 8 interposed therebetween, and a back light 18 for emitting a light ray to the liquid crystal element 8 through the polarizing splitter film 12. The polarizing splitter film 12 transmits a light ray polarized in one direction while reflecting a light ray linearly polarized in a direction perpendicular to the one direction. When the emission of the light emitting device 18 is used to present the numeric information and the like, the information is presented by the emission of the back light as represented by an arrow D.

FIG. 1

## Description

The present invention relates to an electronic watch such as a wristwatch, a stopwatch and the like, for counting and presenting time.

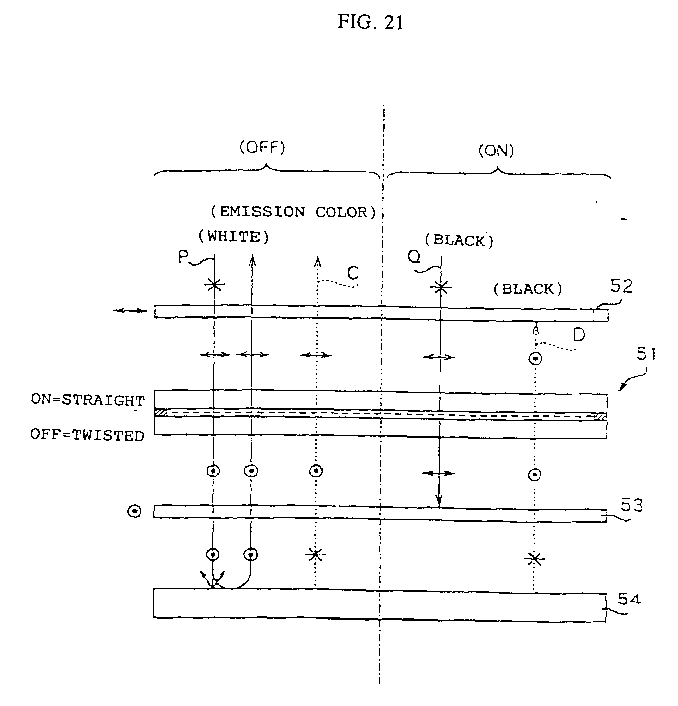

Electronic watches that employ a flat display such as a liquid crystal display to present numeric information and the like thereon are well known. For example, an electronic watch employing a liquid crystal display comprises a pair of polarizers 52 and 53 with a liquid crystal element 51 interposed therebetween, and a light emitting element 54 arranged on the underside of the polarizer 53 as shown in FIG. 21. The pair of polarizers 52 and 53 are arranged such that their alignments are mutually perpendicular.

In such a conventional electronic watch, the ambient light is used to present numeric information and the like during light daytime and the light emitting element 54 emits a light as necessary to present numeric information and the like during dark night-time. To present numeric information, a predetermined ON voltage is applied between electrodes of the liquid crystal element 51, and an area where no voltage is applied or where an OFF voltage is applied is a background of white or any other appropriate colour. As shown, the area where the ON voltage is applied to present information is represented by "ON" and the area where no voltage or the OFF voltage is applied is represented by "OFF."

When the ambient light is used to present the background (namely with the liquid crystal element 51 at an OFF state), a light ray linearly polarized in a direction parallel to the page of FIG. 21, out of the ambient light, namely the natural light, is transmitted through the polarizer 52 as represented by an arrow P, and is twisted by 90° in polarization direction by the liquid crystal element 51 at an OFF state, thereby becoming a light ray linearly polarized in a direction perpendicular to the page of FIG. 21. The linearly polarized light ray is then transmitted through the polarizer 53, and is scattered on the surface of the light emitting element 54, and part of the scattered light is transmitted through the polarizer 53, liquid crystal element 51 and polarizer 52 in that order, and is presented outside, and the background is thus recognised as a white background.

When the ambient light is used to present numeric information and the like (namely with the liquid crystal element 51 at an ON state), a light ray linearly polarized in a direction parallel to the page of FIG. 21, out of the ambient light, is picked out by the polarizer 52, and is transmitted through the liquid crystal element 51 as represented by an arrow Q. Since the liquid crystal element 51 is at an ON state, the linearly polarized light ray keeps its polarization direction parallel to the page of FIG. 21 without being twisted, and is thus absorbed by the polarizer 53. As a result, this area is externally recognised as "black."

In this way, numbers and the like in black, indicating time and other information, are presented on the white background when the ambient light is used for presentation.

On the other hand, when the emission of the light emitting element 54 is used to present the background (namely with the liquid crystal element 51 at an OFF state), as represented by an arrow C, a light ray linearly polarized in a direction in perpendicular to the page of FIG. 21, out of the emission of the light emitting element 54, namely the natural light, is picked out by the polarizer 53, and is twisted by 90° in polarization direction by the liquid crystal element 51 at an OFF state, thereby becoming a light ray linearly polarized in a direction parallel to the page of FIG. 21, and is transmitted through the polarizer 52 to be recognised externally. The colour of the light ray recognised is the emission colour of the light emitting element 54, and typically white.

When the emission of the light emitting element 54 is used to present numeric information and the like (namely with the liquid crystal element 51 at an ON state), as represented by an arrow D, a light ray linearly polarized in a direction in perpendicular to the page of FIG. 21, out of the emission of the light emitting element 54, is picked out by the polarizer 53, and is transmitted through the liquid crystal element 51 at an ON state and reaches the polarizer 52. Since the linearly polarized light ray then fails to coincide with the polarization direction of the polarizer 52, it is absorbed by the polarizer 52, and as a result, this area is externally recognised as "black."

In this way, to present information using the emission of the light emitting element 54, numbers and the like in black, indicating time and other information, are presented on the background of the emission colour of the light emitting element 54.

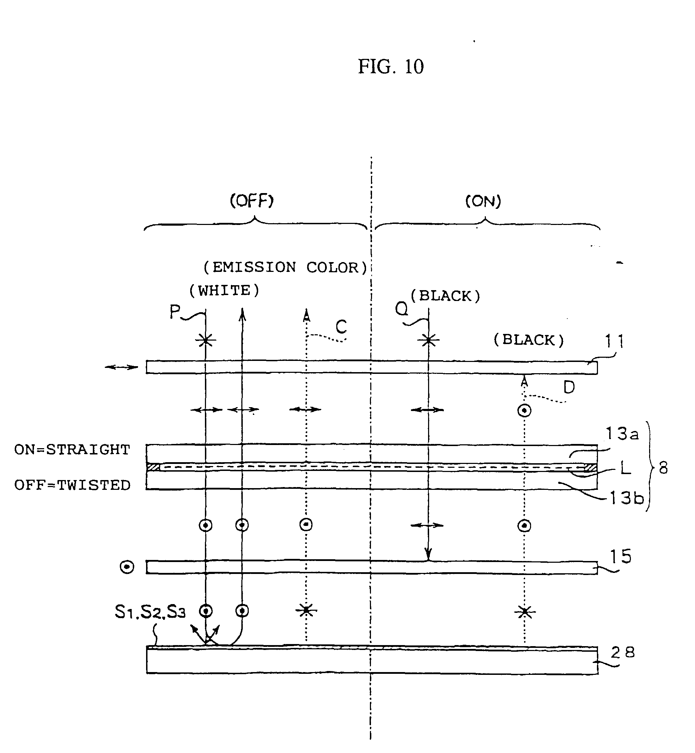

FIG. 10 shows an arrangement of an electronic watch, particularly of a display element of the electronic watch. The electronic watch comprises the liquid crystal element 8, a first polarizer 11 arranged on one side of the liquid crystal element 8, a second polarizer 15 opposed to the first polarizer 11 with the liquid crystal element 8 interposed therebetween, and the back light 28.

An ordinary polarizer like the first polarizer 11, is arranged between the liquid crystal element 8 and the back light 28. The back light 28 emits lights of different colours in a plurality of areas while the conventional back light 54 emits a monochrome light from its entire surface.

The mode of display shown in FIG. 10, namely, the travel of the natural ambient light and of the emission of the back light 28, remains unchanged from that shown in FIG. 21. When the natural ambient light is used, the background is presented by an irregularly reflected light ray from the back light 28 as represented by an arrow P, and the numeric information and the like are presented in black as represented by an arrow Q. When the emission of the back light 28 is used, the background is presented in the emission colour of the back light 28 as represented by an arrow C, and the numeric information and the like are presented in "black" as represented by an arrow D.

The back light 28 is provided with a plurality of emission areas S1, S2 and S3, and colours externally recognised may be emission colours S1, S2 and S3 in the optical state represented by the arrow C. More specifically, the background colours with the back light 28 lit may be separately presented in yellowish green, red and orange. The mode of display in which the background colour on the display screen is switched between a white and another particular colour such as yellowish green depending on whether the back light 28 is lit or extinguished is novel and appealing to the viewer.

As understood from the above discussion, numeric number and the like are simply presented in "black" in the conventional electronic watch both when the natural light is used and when the emission of the light emitting element is used, and the mode of display for numeric information and the like is simple.

The present invention has been developed in view of this problem, and it is a first object of the present invention to diversify the mode of display for numeric information and the like in a watch that selects between the natural light and the light emitting element.

As shown in FIG. 21, the light emitting element conventionally emits a monochromatic light in the watch of the type that presents information using the light emitted by the light emitting element disposed beneath the polarizer. The background colour is thus monochromatic, for example, white only when the background colour is presented by the emission colour as represented by the arrow C in FIG. 21. Although the mode of display works in a simple presentation of the numeric information and the like, the mode of display may not be sufficient in the job of calling a viewer's attention.

It is a second object of the present invention to provide a novel mode of display that draws a viewer's attention by introducing a new idea in the coloration of an image on an electronic watch.

Embodiments of the present invention will now be described by way of further example only and with reference to the accompanying drawings, in which:-

FIG. 1 diagrammatically shows a major portion of one embodiment of the electronic watch of the present invention.

FIG. 2 is a perspective view showing the internal structure of a polarizing splitter film that is used a major component of the electronic watch of FIG. 1.

FIG. 3 diagrammatically shows the operation of the polarizing splitter film shown in FIG. 2.

FIG. 4 is a cross-sectional view showing the section of one embodiment of the electronic wristwatch as one embodiment of the electronic watch of the present invention.

FIG. 5 is a plan view showing the assembly used in the electronic wristwatch of FIG. 4.

FIG. 6 is a cross-sectional view of the assembly of FIG. 5.

FIG. 7 diagrammatically shows a major portion of another embodiment of the electronic watch of the present invention.

FIG. 8 diagrammatically shows a major portion of yet another embodiment of the electronic watch of the present invention.

FIG. 9 diagrammatically shows a major portion of yet another embodiment of the electronic watch of the present invention.

FIG. 10 diagrammatically shows an arrangement of an electronic watch.

FIG. 11 is a plan view showing one embodiment of light emitting means.

FIG. 12 is a plan view showing one modification of the light emitting means.

FIG. 13 is a plan view showing another modification of the light emitting means.

FIG. 14 diagrammatically shows a major portion of yet another embodiment of the electronic watch of the present invention.

FIG. 15 is a plan view showing the external appearance of one embodiment of the electronic watch of the present invention.

FIG. 16 is a cross-sectional view showing the internal structure of the electronic watch of FIG. 15.

FIG. 17 is a timing diagram showing the main control signals generated in a control circuit of FIG. 14.

FIG. 18 is a flow diagram showing a major portion of the process executed by the control circuit in FIG. 14.

FIG. 19 is a plan view showing a modification of a light emitting device.

FIG. 20 is a cross-sectional view showing the section of the light emitting device of FIG. 19.

FIG. 21 diagrammatically shows a major portion of one example of conventional electronic watch.

(1) To achieve the above object, the electronic watch of the present invention for counting and presenting time comprises

(a) first polarizing splitter means which transmits therethrough light ray components linearly polarized in one direction while not transmitting therethrough light ray components linearly polarized in a direction perpendicular to said one direction,

(b) polarization axis varying means, disposed at a position for receiving the linearly polarized light ray from the first polarizing splitter means, for selecting between a state in which a polarization axis is varied and a state in which the polarization axis is not varied,

(c) second polarizing splitter means, diametrically opposed to the first polarizing splitter means with the polarization axis varying means interposed therebetween, for transmitting light ray components linearly polarized in second direction and reflecting light ray components linearly polarized in a direction perpendicular to said second direction, and

(d) light emitting means for emitting a light ray to the polarization axis varying means through the second polarizing splitter means.

In the above arrangement, the first polarizing splitter means is constructed of an ordinary polarizer. The ordinary polarizer means a film member which outputs a light ray linearly polarized in one direction in response to an incident natural light, and may be produced by interposing a polarizer layer between protective layers of TAC (cellulose triacetate).

The polarization axis varying means is constructed of a liquid crystal element, for example. Liquid crystals may be any of variety of liquid crystals including a TN (Twisted Nematic) liquid crystal, an STN (Super-Twisted Nematic) liquid crystal, and an ECB (Electrically Controlled Birefringence) liquid crystal. The STN liquid crystals include the one employing colour compensation optically anisotropic material, such as an F-STN (Film Compensated Super-Nematic) liquid crystal.

The second polarizing splitter means may be one of (1) the polarizing splitter film of a multi-layered structure of films as disclosed in International Publication Nos. W095/17692 and W095/27919, (2) a polarizing splitter having a cholesteric liquid crystal with a $(1/4)$ $\lambda$ plate on one side or on both sides, (3) a polarizing splitter member for splitting a light into a reflected polarized light and a transmitted polarized light taking advantage of the Brewster's angle (SID 92 DIGEST, pages 427 to 429) and (4) a polarizing splitter member employing the hologram.

Available as the light emitting means are (1) a flat light emitter such as an EL (Electroluminescence), (2) a light emitting device having a cold cathode tube, as a line light source, at the side edge of a light guide plate having a flat emission surface, (3) a light emitting device having a array of LEDs (Light Emitting Diodes), dot light sources, at the side edge of a light guide plate having a flat emission surface.

The electronic watch is characterised by the use of the second polarizing splitter means as a constituting element (c), instead of a polarizer arranged between the polarization axis varying means and the light emitting means in the conventional electronic watch. The polarizer has generally the function of transmitting light ray components linearly polarized in one direction while not transmitting light ray components linearly polarized in a direction perpendicular to said one direction by absorption, and in contrast, the second polarizing splitter means transmits light ray components linearly polarized in second direction while reflecting light ray components linearly polarized in a direction perpendicular to said second direction, particularly, totally reflecting the light ray linearly polarized in a direction perpendicular to the polarization axis of the light ray linearly polarized in the one direction. When the second polarizing splitter means is used in combination with a polarizer, the mode of display for presenting numeric information and the like is diversified when the natural light or the light emitting means is selected for information presentation, compared with the conventional electronic watch employing the two polarizers.

Although the conventional watch presents numeric information and the like in black only when it selects either the natural light or the emission of the light emitting means, the electronic watch of the present invention works in an ordinary mode of display presenting numeric information and the like in black when the natural light is used but presents numeric information and the like in a colour unique to the light emitting means when it is used. This means that the light emitting means selects a desired colour from among a variety of display colours to match an information presentation situation.

For example, when the electronic watch is a digital wristwatch, it may select a red colour which is easily recognisable against the black background when numeric information and the like are presented under dark night-time environments. When the electronic watch is applied as a diver's wristwatch for underwater use, it may gives warning messages in an outstanding colour such as yellow to alert a diver to water pressure and diving time.

When the ordinary polarizer is replaced with the second polarizing splitter means as the constituting element (c) that transmits a light ray linearly polarized in one direction and reflects a light ray linearly polarized in a direction perpendicular to the one direction, the light ray, which is absorbed or dispersed through the polarizer in the conventional watch, contributes to the presentation of information by reflection, and as a result, the background of the watch is brightened, increasing the contrast of numeric information and the like. This serves well aged people who typically has low vision.

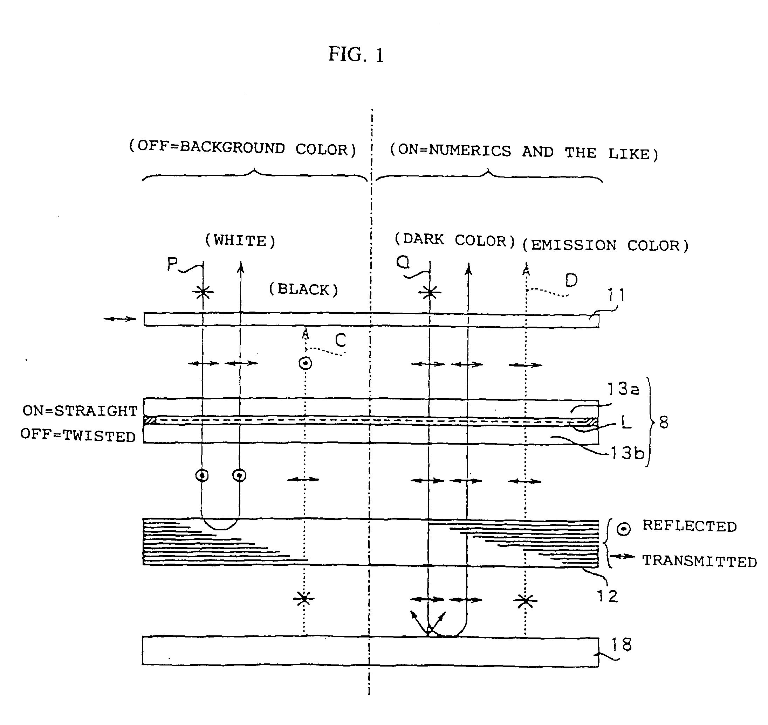

(2) In the electronic watch, a semi-transmissive layer is arranged between the second polarizing splitter means and the light emitting means. There are times when the natural light picked up by the first polarizing splitter means is transmitted through the polarization axis varying means and the second polarizing splitter means and reaches the surface of the light emitting means (the arrow Q in FIG. 1) in the electronic watch of the present invention, and then the light is irregularly reflected on the surface of the light emitting means. Since the strength of light exiting from the irregular reflection area drops, numeric information and the like may be presented there taking advantage of this area. Since only part of irregularly reflected light ray exits from the information display area, the contrast there is reduced accordingly, and information display for numbers and the like is thus difficult to recognise.

With the semi-transmissive layer arranged between the second polarizing splitter means and the light emitting means, the light is absorbed by the semi-transmissive layer, the luminance of the presented information is sufficiently reduced, and as a result, a high contrast is assured for the displayed numeric information and the like.

(3) In the electronic watch, a light scattering layer is arranged between the first polarizing splitter means and the light emitting means. There are times when the natural light picked up by the first polarizing splitter means is transmitted through the polarization axis varying means and reflected from the second polarizing splitter means and exits externally (the arrow P in FIG. 1). With nothing lying in the optical path between the polarization axis varying means and the second polarizing splitter means, the reflected light ray exits in a specularly reflected state, and a viewer views a specularly reflected image, which is not preferable for a mode of display of a time counting device. With the light scattering layer arranged in the optical path, the viewer recognises a white image instead of a specularly reflected image, and the electronic watch as a time counting device thus provides a mode of display easy to recognise.

(4) In the electronic watch, the light emitting means preferably emits at least one of orange, red and yellowish green light rays. In the conventional electronic watch that includes a pair of polarizers, information is presented in black only because the presentation of the numeric information and the like is performed through the state of light absorption. In contrast, the electronic watch of the present invention presents numeric information and the like by the emission of the light emitting means, and if emission colours of the light emitting means other than black are arranged, numeric information and the like are presented in a particular colour other than black. Especially when an emission colour is selected from among orange, red and yellowish green, it is eye-catching and outstanding display.

(5) Whether the emission colour of the light emitting means is either monochrome or multi-coloured is not mentioned in the above discussion. In connection with this, the emission surface of the light emitting means is divided into several partitions, with these partitions emitting multi-coloured light rays. When numeric information and the like are presented using the light emitting means, a plurality pieces of information is provided in several colours, and a diversified mode of display is provided to meet various demands.

(6) In the above electronic watch, the emission colour itself of the light emitting means may be varied when the light emitting means emits lights of a plurality of colours, and the light emitting means may include a white light source and a colour filter. The use of a colour filter permits light emitting means to emit multi-coloured lights even when the light emitting means is a typical white light source.

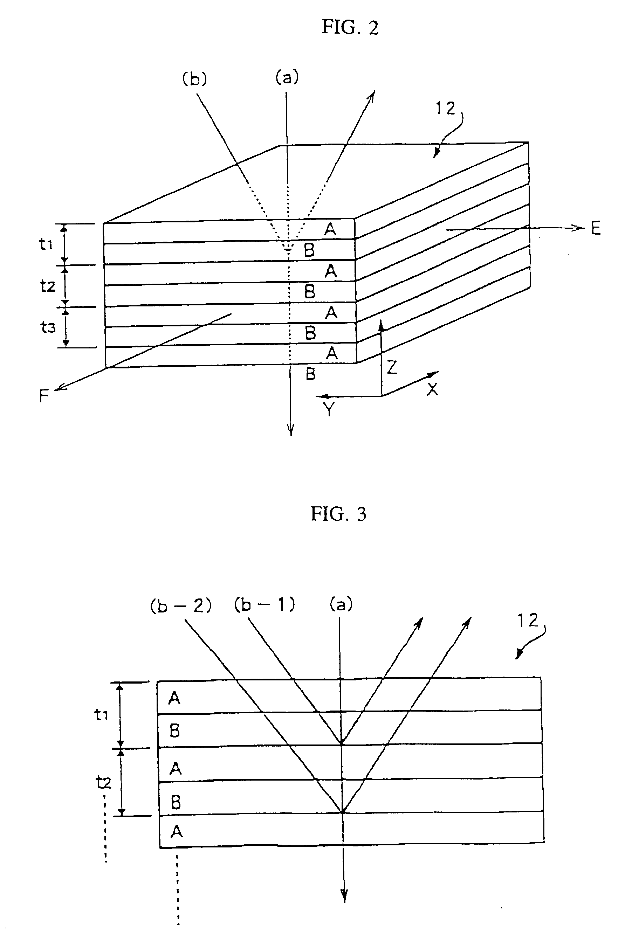

(7) In the above electronic watch, the second polarizing splitter means may be constructed of a diversity of polarizing splitter elements as described above, and is preferably constructed of a polarizing splitter film having a structure disclosed in International Publication Nos. W095/17692 and W095/27919. As shown in FIG. 2, the polarizing splitter film has a multi-layered structure into which two types of layers A and B are alternately laminated, and two adjacent layers of a plurality of layers are equal to each other in refractive index in one direction, but different from each other in refractive index in a direction perpendicular to the one direction, and the plurality of layers are varied from layer to layer in thickness.

Referring to FIG. 2, considering three mutually perpendicular axis directions XYZ, two layers A and B are laminated using an extrusion molding technique, and stretched in one direction (X direction, for example), but not stretched in another direction (Y direction, for example). Namely, the X direction is a stretching direction, and the Y direction is transverse to it. The material of the B layer has a refractive index of $n_B$ ($n_B$=1.64, for example), and remains unchanged regardless of the stretching process. On the other hand, the material of the A layer has a refractive index varying through the stretching process. When a sheet of the A material is stretched in one axis, for example, it has a refractive index of $n_{AX}$ ($n_{AX}$ = 1.88, for example) in the stretching direction (the X direction, for example) and a different refractive index of $n_{AY}$ ($n_{AY}$ = 1.64, for example) in the transverse direction (the Y direction).

When the multi-layered structure constructed of A and B materials shown in FIG. 2 is stretched in the X direction, a large refractive index difference $\Delta n$ = 1.88-1.64=0.24 is generated in the stretching direction. On the other hand, the refractive index difference between A and B layers in the Y direction perpendicular to the stretching direction is $\Delta n$ = 1.64-1.64 = 0, and thus no refractive index difference takes place. For such optical characteristics, when a light ray is incident on the polarizing splitter film 12, a polarized component (a) having a transmission axis E of the incident light ray is transmitted through the polarizing splitter film 12. A polarized component (b) having an absorption axis F of the incident light ray is subject to the refractive index difference Dn, and is reflected therefrom for this reason.

The layers A and B are individually slightly varied to be t1, t2, t3,..., and for this reason, light rays of different wavelengths (b-1), (b-2),... are reflected from layer boundaries as shown in FIG. 3. More particularly, light rays of in a wide wavelength range are reflected by the multi-layered structure of two types of layers of A and B.

If the layers of thicknesses of t1, t2, t3,... are combined such that light rays of virtually all wavelengths are reflected, a finally obtained reflected light ray is a white light ray. On the other hand, if a combination of the layers of thicknesses of t1, t2, t3,... is appropriately set up, a desired wavelength, namely, a light ray of a desired colour is selectively reflected by the polarizing splitter film 12.

Since the polarizing splitter film 12 is manufactured to be extremely thin with flexibility imparted thereto, the overall thickness of the electronic watch is made thin, and its manufacturing process is simplified.

(8) To achieve the second object, another electronic watch of the present invention for counting and presenting time comprises

(a) first polarizing splitter means which transmits therethrough light ray components linearly polarized in one direction while not transmitting therethrough light ray components linearly polarized in a direction perpendicular to said one direction,

(b) polarization axis varying means, disposed at a position for receiving the linearly polarized light ray from the first polarizing splitter means, for selecting between a state in which a polarization axis is varied and a state in which the polarization axis is not varied,

(c) second polarizing splitter means, diametrically opposed to the first polarizing splitter means with the polarization axis varying means interposed therebetween, for transmitting light ray components linearly polarized in second direction and reflecting light ray components linearly polarized in a direction perpendicular to said second direction,

(d) light emitting means for emitting a light ray to the polarization axis varying means through the second polarizing splitter means, and

(e) wherein the light emitting means emits light rays of a plurality of different colours to the polarization axis varying means.

The feature common to the two electronic watches is that the light emitting means is used in the comparison of the electronic watches (1) and (8). In the electronic watch (1), however, the light emitting means is not limited to any particular construction, while the light emitting means in the electronic watch (8) is limited to the one which emits light rays of a plurality of different colours.

The light emitting means emits light rays of plurality of colours according to this embodiment, and the background is divided into a plurality of partitions, with these partitions emitting respective differently coloured light rays in the mode of display, and a novel display drawing the viewer's attention thus results.

(9) Contemplated are a variety of methods of emitting light rays of a plurality of different colours with the emitting means. For example, a plurality of light sources that emit light rays of different colours may be incorporated in the light emitting means. With a plurality of light sources for different colours arranged in this way, colour light ray emission areas selectively emit colour light rays serving the purpose of diversifying the mode of display, compared with the arrangement in which a plurality of light emission areas are concurrently lit or extinguished.

(10) Available as a method of emitting light rays of a plurality of different colours with the light emitting means, besides the method (9), is to incorporate a plurality of types of colour filters which selectively transmit different colour light rays. Using the colour filters to partition in colour the emission by the light emitting means, a colour partitioning pattern may be formed to any desired pattern.

(11) In the electronic watch according to (8) through (10), the second polarizing splitter means transmits light ray components linearly polarized in second direction while not absorbing but reflecting light ray components linearly polarized in a direction perpendicular to said second direction.

In this way, the first polarizing splitter means, farther from the light emitting means, is constructed of an ordinary polarizer, and the second polarizing splitter means, nearer to the light emitting means, is constructed of the above-described reflective-type polarizing splitter means so that a mode of display for presenting numeric information and the like by means of the emission of the light emitting means is provided. In such a case, the light emitting means emits light rays of plurality of colours according to the present invention, and numeric information and the like are presented in a plurality of colours in the mode of display, and a novel display drawing the viewer's attention thus results.

With the second polarizing splitter means constructed of the reflective-type polarizing element, the ON/OFF operation of the light emitting means instantaneously changes to different colours the colour of the background and display colour of the numeric information and the like on a time counting screen, and an interesting and novel mode of display is thus provided.

(12) In the electronic watch constructed as described above, the plurality of colours emitted by the light emitting means are not limited to particular colours, and they preferably include orange, red and yellowish green. These colours are eye-catching and outstanding. When the reflective-type polarizing splitter element is used as the second polarizing splitter means, the numeric information and the like are presented by means of the emission of the light emitting means, and the background colour is typically "black." Since orange, red and yellowish green are very outstanding against the black background, the emission colours are preferably selected from these colours when the reflective-type polarizing splitter element is used as the second polarizing splitter means.

(13) To achieve the second object, the electronic watch of the present invention comprises a liquid crystal cell that changes the transmission state of a light ray by changing an applied electric field and light emitting means for emitting a light ray to the liquid crystal cell, wherein the light emitting means comprises light sources of different light colours, on the basis of at least one light source for one colour.

In the electronic watch, the colour light sources are selectively lit, and a background display area and information display area for numbers and the like are presented not only in white or black but also in a variety of desired colours, thereby providing a novel display drawing the viewer's attention.

(14) In the electronic watch according to (13), emissions of different colours are preferably presented in a colour mixture in a naked-eye vision state. The naked-eye vision state means that the viewer observes the watch with his or her naked eyes, typically at a distance still permitting his or her vision to focus on the display of the watch, for example, at a distance of 15 cm or so apart from the watch. In the colour mixture display, a variety of colours up to the viewer's desire may be presented.

(15) In the electronic watch according to (13) or (14), the colour mixture state in the colour mixture presentation preferably changes. For example, when red and green are mixed, a red-based colour is preferably changed to a green-based colour and vice versa at a proper timing. With this arrangement, the viewer's attention is quickly drawn to the watch.

(16) When the colour mixture state in the colour mixture presentation is changed in the electronic watch (15), the change in the colour mixture state is automatically made at predetermined time intervals. For example, both red and green are mixed, the ratio of mixture of red and green is changed from the red-based colour to the green-based colour at several steps at regular intervals and vice versa. With this arrangement, the viewer sees the gradual and automatic change of the background colour or the like of the electronic watch.

(17) In the electronic watch according to (15) and (16), the changing of the colour mixture state in the colour mixture presentation is performed by changing the emission strength of each colour light source in the light emitting means. Available as a method for changing the emission strength is changing the duty factor of a current supplied to the light source.

(18) In the electronic watch according to (15) and (16), the changing of the colour mixture state in the colour mixture presentation is performed by changing the emission area of each colour light source in the light emitting means.

(19) In the electronic watch according to (13) through (18), the light source is one of an EL (electroluminescence), an LED (light emitting diode) and a lamp, or a combination of thereof.

(20) In the electronic watch according to (13) through (19), the liquid crystal cell comprises

(a) first polarizing splitter means which transmits therethrough light ray components linearly polarized in one direction while not transmitting therethrough light ray components linearly polarized in a direction perpendicular to said one direction,

(b) polarization axis varying means, disposed at a position for receiving the linearly polarized light ray from said first polarizing splitter means, for selecting between a state in which a polarization axis is varied and a state in which the polarization axis is not varied, and

(c) second polarizing splitter means, diametrically opposed to said first polarizing splitter means with said polarization axis varying means interposed therebetween, for transmitting light ray components linearly polarized in second direction and reflecting light ray components linearly polarized in a direction perpendicular to said second direction.

In the above arrangement, the first polarizing splitter means is constructed of an ordinary polarizer. The ordinary polarizer means a film member which outputs a light ray linearly polarized in one direction in response to an incident natural light, and may be produced by interposing a polarizer layer between protective layers of TAC (cellulose triacetate).

The polarization axis varying means is constructed of a liquid crystal element having the structure that a liquid crystal is interposed between a pair of light transmissive substrates each having a light transmissive electrode. The liquid crystal may be any of variety of liquid crystals including a TN (Twisted Nematic) liquid crystal, an STN (Super-Twisted Nematic) liquid crystal, and an ECB (Electrically Controlled Birefringence) liquid crystal. The STN liquid crystals include the one employing colour compensation optically anisotropic material, such as an FSTN (Film Compensated Super-Nematic) liquid crystal.

In this embodiment, the first polarizing splitter means has the function that "transmits a light ray linearly polarized in one direction while not transmitting polarized light rays other that light ray, by absorption and dispersion," and in contrast, the second polarizing splitter means has the function that "transmits a light ray linearly polarized in one direction while reflecting the remaining polarized portions, particularly, totally reflecting the linearly polarized light ray in a direction perpendicular to the polarization axis of the light ray linearly polarized in the one direction."

The second polarizing splitter means may be one of (1) the polarizing splitter film of a multi-layered structure of films as disclosed in International Publication Nos. WO95/17692 and WO95/27919, (2) a polarizing splitter having a cholesteric liquid crystal with a (1/4) λ plate on one side or on both sides, (3) a polarizing splitter member for splitting a light into a reflected polarized light and a transmitted polarized light taking advantage of the Brewster's angle (SID 92 DIGEST, pages 427 to 429) and (4) a polarizing splitter member employing the hologram. Since the polarizing splitter film having a multi-layered structure of films has already been described with reference to FIGS. 2 and 3, the discussion about it is not repeated here.

If the second polarizing splitter means is a polarizing splitter element characteristically identical to the first polarizing splitter means, light absorption takes place in the two polarizing splitter elements, and the amount of light available for time display substantially drops. In this embodiment, the second polarizing splitter means is constructed of a polarizing splitter element that transmits the light ray linearly polarized in one direction while not absorbing but reflecting other linearly polarized components, and the light rays reflected from the second polarizing splitter means contribute to time display, substantially brightening the time display screen.

[Description of the Embodiments]

(First embodiment)

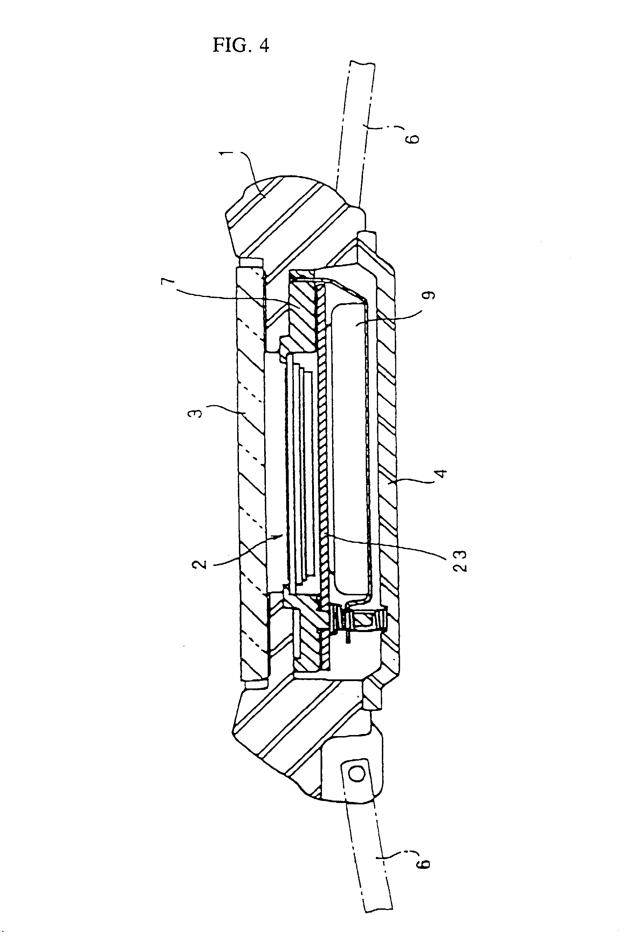

FIG. 4 is a cross-sectional view of the construction of an electronic wristwatch of one embodiment of the electronic watch of the present invention. The wristwatch comprises, for example, a plastic case 1, an assembly 2 housed in the inside of the case 1, a glass cover 3 arranged above the assembly 2 and secured to the case 1, and a bottom cover 4 for supporting the assembly 2. Designated reference numeral 6 is a wrist strap.

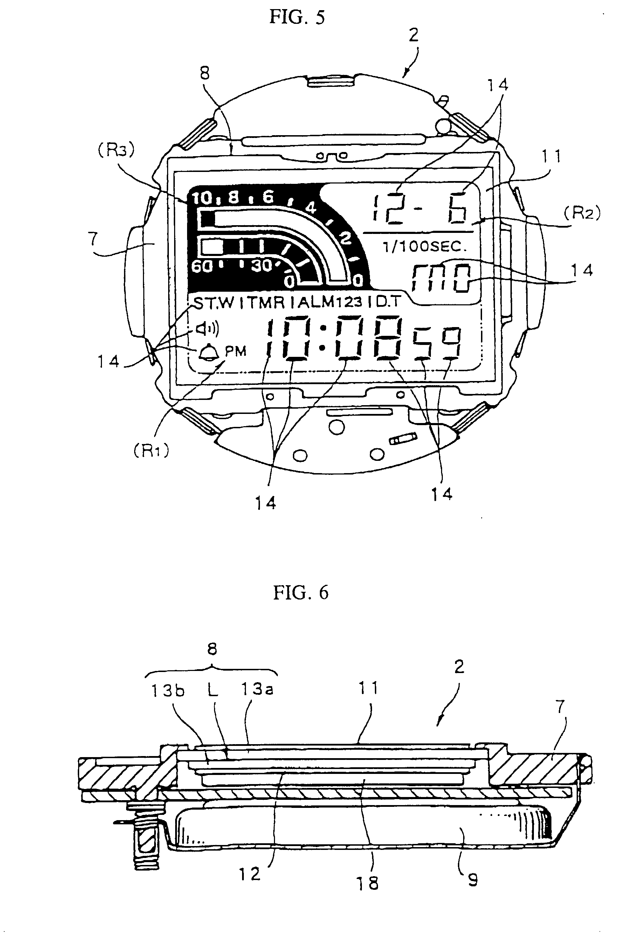

Referring to FIG. 6, the assembly 2 comprises a panel frame 7, a liquid crystal element 8 as polarization axis varying means supported by the panel frame 7, a polarizer 11 as first polarizing splitter means glued onto the external surface (top surface in FIG. 6) of the liquid crystal element 8, a polarizing splitter film 12 as second polarizing splitter means opposed to the polarizer 11 with the liquid crystal element 8 therebetween, a back light 18 as light emitting means arranged on the underside of the polarizing splitter film 12, and a battery 19.

The polarizer 11 transmits a light ray linearly polarized in one direction while not transmitting other polarized light rays by absorbing or dispersing them. The polarizing splitter film 12 is the one having a multi-layered structure into which a plurality films are laminated as shown in FIG. 2. As already described, the polarizing splitter film 12 transmits a light ray linearly polarized in one direction while not absorbing but reflecting the remaining polarized light rays, particularly, totally reflecting the light ray linearly polarized in a direction perpendicular to the polarization axis. The back light 18 is constructed of EL that is a plane light emitting device. The surface of the back light 18 is an irregularly reflective surface and its colour is grey.

The liquid crystal element 8 comprises a pair of opposing light transmissive substrates, for example, transparent glass substrates 13a and 13b, and a gap formed between the two glass substrates, namely a cell gap, is filled with a liquid crystal, for example, a TN liquid L. The glass substrates 13a and 13b are provided with a plurality of light transmissive electrodes 14 to present numeric information and the like as shown in FIG. 5. In this embodiment, seven-segment light transmissive electrodes 14 are used to present one digit of numbers.

The mutually opposing light transmissive electrodes 14, formed on each of the pair of glass substrates 13a and 13b, are supplied with a predetermined voltage, and whether the voltage is applied (ON) or not applied (OFF) sets which of the two states the liquid crystal L takes in its alignment. The liquid crystal of this embodiment does not vary the polarization axis of the linearly polarized light ray during its ON state, while it twists the polarization axis of the linearly polarized light ray by 90° during its OFF state.

The operation of the electronic watch thus constructed is now discussed. The electronic watch has two light source modes: in one mode, the emission of the back light 18 is used, and in the other mode, the natural ambient light is used without using the emission of the back light 18. To keep white the background of the display screen of the wristwatch, a related area of the liquid crystal element 8 is set to be in an OFF state, and to present numeric information and the like on the display screen, a related area of the liquid crystal element 8 is set to be in an ON state. Various cases of operation are now discussed.

(The mode in which the natural ambient light is used)

When the natural ambient light is used to present the white background, the liquid crystal element 8 is turned to the OFF state in FIG. 1. As shown by an arrow P, light rays linearly polarized in a direction parallel to the page of FIG. 1, out of an external light, namely, the natural light are transmitted through the polarizer 11, and are twisted by 90° in polarization direction by the liquid crystal element 8 at an OFF state, thereby becoming light rays linearly polarized in a direction perpendicular to the page of FIG. 1. The linearly polarized light rays are reflected from the respective interlayer faces depending on their wavelengths, and then transmitted through the liquid crystal element 8 and polarizer 11 and then externally presented. In this way, the "white" background is presented on the display screen of the wristwatch.

When the natural ambient light is used to present the numeric information and the like, the liquid crystal element 8 is turned to the ON state. As represented by an arrow Q, light rays linearly polarized in a direction parallel to the page of FIG. 1, out of the external light, are picked out by the polarizer 11, and are transmitted through the liquid crystal element 8. Since the liquid crystal element 8 is at an ON state, the linearly polarized light rays keep their polarization direction parallel to the page of FIG. 1 without being twisted, and are thus transmitted through the polarizing splitter film 12, and irregularly reflected on the surface of the back light 18. The irregular reflection reduces the amount of light returning back to the polarizer 11, and the corresponding area is recognised as grey or dark from the outside, and the viewer recognises it as numeric information and the like.

(The mode in which the back light 18 is used)

When the back light 18 is used to present the background colour, the back light 18 is lit and the liquid crystal element 8 is turned to an OFF state. As represented by an arrow C, light rays linearly polarized in a direction parallel to the page of FIG. 1, out of the emission of the back light 18, namely random polarized light are picked out by the polarizing splitter film 12, and are twisted by 90° in polarization direction by the liquid crystal element 8 at an OFF state, thereby becoming light rays linearly polarized in a direction perpendicular to the page of FIG. 1. These linearly polarized light rays are prevented from exiting outward as a result of being absorbed or dispersed by the polarizer 11, and are recognised as a "black" background colour from the outside.

When the emission of the back light 18 is used to present numeric information and the like, the back light 18 is lit and the liquid crystal element 8 is turned to an ON state. As represented by an arrow D, light rays linearly polarized in a direction parallel to the page of FIG. 1, out of the emission of the back light 18 are picked out by the polarizing splitter film 12, are transmitted through the liquid crystal element 8 and then the polarizer 11, and then presented externally.

Using the emission of the back light 18 in this way, time and other alphanumeric information of the emission colour of the back light 18 are presented against the black background. For example, when the back light 18 emits a red light, the information is presented in red against the black background. This setting offers a distinctly recognisable display, compared with the case in which information in black is presented against a white background during night-time.

Such a mode of display is useful when a warning is displayed on a diver's watch. More specifically, the back light 18 may be set to emit an eye-catching colour light, for example, yellow light, and when the situation in water pressure and diving time creates the need for a warning, the back light 18 emits yellow light to give a yellow warning display against the black background, thereby effectively alerting the diver of the situation.

Any colour as the emission colour of the back light 18 is selected from a variety of colours, meeting the viewer's demand. For example, when orange, red and yellowish green are selected, these colours are distinct against the black background, and the mode of display is easily recognisable to the viewer. A great difference takes place in the mode of display between when the back light 18 is used and when the back light 18 is not used, drawing the user's attention and thereby making the electronic watch quite useful.

The back light 18 may emit a monochromatic light, or emit generally multi-colour light rays with several partitions emitting respective colour lights. With the multi-colour light rays emitted, the back light 18 presents a variety of information including numeric information in different colours, and the watch therefore presents a variety of modes of display meeting a variety of requirements.

When the white background is presented based on the ambient light in the conventional watch shown in FIG. 21, the external light, when going and returning, is transmitted through the polarizer 53 twice as represented by the arrow P. When the external light is transmitted through the polarizer 53 twice, the luminance of the white background drops, darkening the display on the wristwatch. In the wristwatch of this embodiment, the white background is presented taking advantage of the natural ambient light that is reflected from the polarizing splitter film 12 as represented by the arrow P in FIG. 1, and the amount of light absorbed by the polarizer is reduced, and the white background is brightly presented. This arrangement presents a distinctly recognisable display to aged people who typically has low vision.

(Second embodiment)

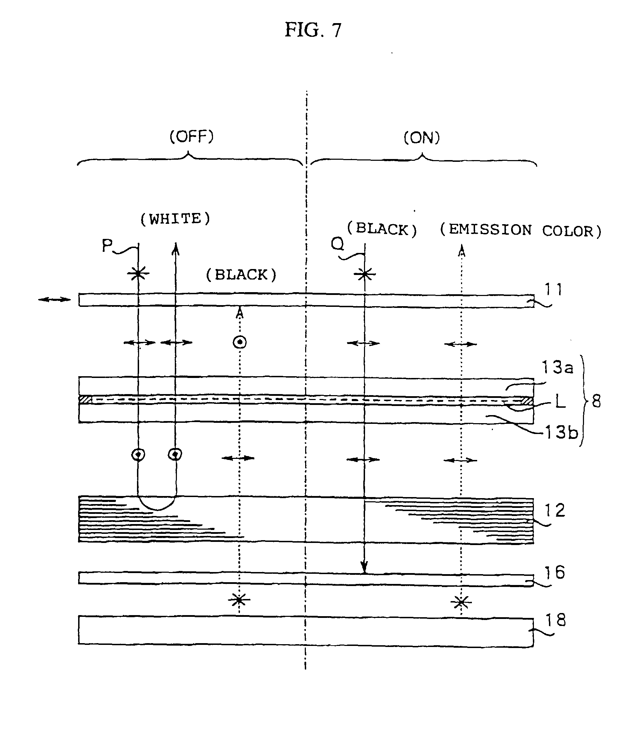

FIG. 7 shows a major portion of a second embodiment of the electronic watch of the present invention according to Claim 1. This embodiment is different from the preceding embodiments shown in FIG. 1 in that a semi-transmissive layer 16 is arranged between the polarizing splitter film 12 and the back light 18. The semi-transmissive layer 16 may be constructed of a grey semi-transmissive, light-absorbing material or a black, light-absorbing material that has a plurality of holes for letting light to transmit therethrough.

In this embodiment, the natural ambient light is used, and the liquid crystal element 8 is turned to an ON state to present numeric information and the like, and as represented by the arrow Q, the linearly polarized light ray from the polarizing splitter film 12 is absorbed or dispersed by the semi-transmissive layer 16, and the corresponding area is presented in black. This embodiment presents numeric information and the like in higher contrast than the first embodiment in which numeric information and the like are presented taking advantage of the irregular reflection of light on the surface of the back light 18 as represented by the arrow Q in FIG. 1.

(Third embodiment)

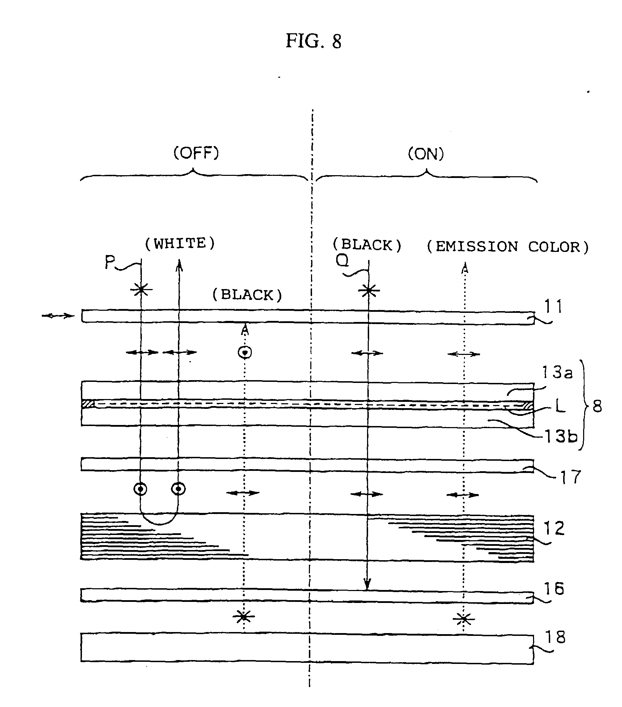

FIG. 8 shows a third embodiment of the electronic watch of the present invention. The third embodiment is different from the first embodiment shown in FIG. 1 in that the semi-transmissive layer 16 is arranged between the polarizing splitter film 12 and the back light 18 and in that a light scattering layer 17 is arranged between the liquid crystal element 8 and the polarizing splitter film 12. According the third embodiment, the light scattered or diffused by the light scattering layer 17 helps present the background distinctly white.

(Other embodiments)

Although the preferred embodiments of the electronic watch recited in Claim 1 have been discussed, the present invention is not limited to these embodiments, and various other embodiments are possible within the scope of the invention defined by the claim.

In the above embodiments, the present invention is implemented in the wristwatch, but the present invention may be implemented in other types of electronic watch such as a stopwatch. Furthermore, any light emitting device other than EL may be used as the light emitting means.

In the above embodiments, the liquid crystal element using the TN liquid crystal is used as the polarization axis varying means that switches between the state in which the polarization axis of the polarized light ray is varied and the state in which the polarization axis of the polarized light ray is not varied, and instead of this liquid crystal, the liquid crystal element using the STN liquid crystal or ECB liquid crystal may be used.

The multi-layered structure into which a plurality of films are laminated as shown in FIG. 2 is used as the second polarizing splitter means that transmits the light ray linearly polarized in one direction while reflecting the light ray linearly polarized in a direction perpendicular to the one direction, but instead of this, the second polarizing splitter means may be one of (1) a polarizing splitter having a cholesteric liquid crystal with a $(1/4) \lambda$ plate on one side or on both sides, (2) a polarizing splitter member for splitting a light into a reflected polarized light and a transmitted polarized light taking advantage of the Brewster's angle (SID 92 DIGEST, pages 427 to 429) and (3) a polarizing splitter member employing the hologram.

(Fourth embodiment)

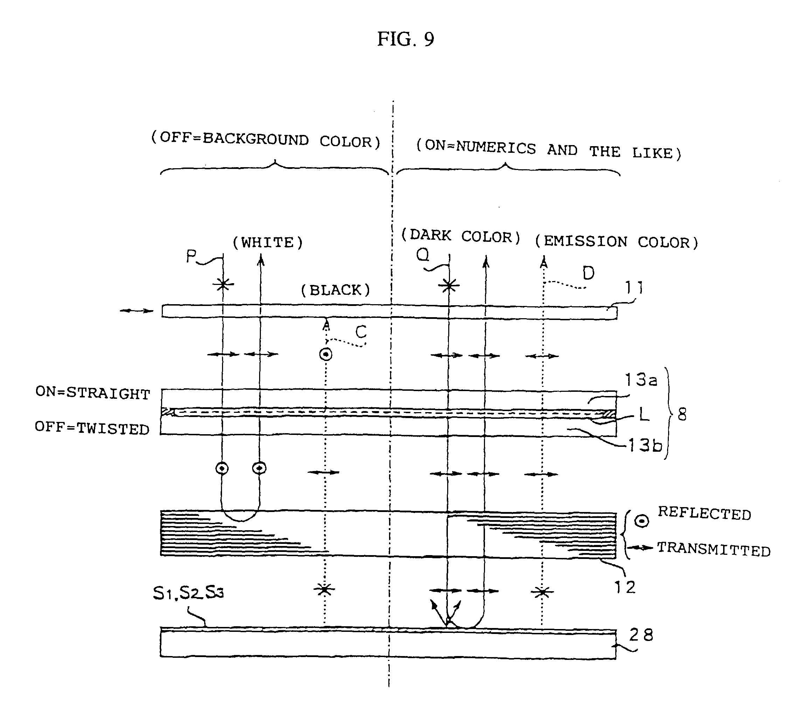

FIG. 9 shows a major portion of a fourth embodiment of the electronic watch of the present invention, particularly of a display element of the electronic watch. The display element shown here may replace the display element shown in FIG. 1 in connection with the electronic watch shown in FIGS. 4, 5 and 6. FIGS. 4, 5 and 6 are already discussed.

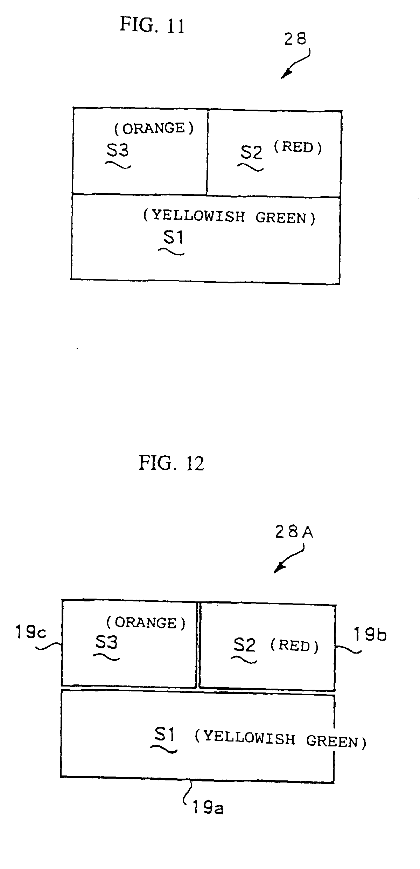

This embodiment has the following feature. Namely, as shown in FIG. 5, the display screen of the liquid crystal element 8 is roughly divided into three areas: a first area R1 for displaying time and the like, a second area R2 for displaying date and the like, and a third area R3 for displaying the water pressure and other additional information. As shown in FIG. 9, three types of light transmissive prints S1, S2, and S3 different in colour are formed on the surface of a back light 28 constructed of EL, and these prints constitute three emission areas S1, S2, and S3 emitting different colour lights respectively within the emission surface of the back light 28 as shown in FIG. 11.

The emission area S1 is arranged in alignment with the first area R1 of the liquid crystal element 8 shown in FIG. 5 and emits a yellowish green light; the emission area S2 is arranged in alignment with the second area R2 and emits a red light; and the emission area S3 is arranged in alignment with the third area R3 and emits a orange light. Since the back light 28 is constructed of a single EL shown in FIG. 11, the three emission areas S1, S2 and S3 are concurrently lit or extinguished.

The operation of the electronic wristwatch thus constructed is now discussed. The electronic wristwatch has two light source modes: in one mode, the emission of the back light 28 is used, and in the other mode, the natural ambient light is used without using the emission of the back light 28. To keep white the background of the display screen of the wristwatch, the corresponding area of the liquid crystal element 8 is set to be in an OFF state, and to present numeric information and the like on the display screen, the corresponding area of the liquid crystal element 8 is set to be in an ON state. Various cases of operation are now discussed.

(The mode in which the natural ambient light is used)

When the natural ambient light is used for presentation under light daylight conditions, particularly to present the background, the liquid crystal element 8 is turned to the OFF state in FIG. 9. As shown by an arrow P, light rays linearly polarized in a direction parallel to the page of FIG. 9, out of an external light, namely random polarized light are transmitted through the polarizer 11, and are twisted by 90° in polarization direction by the liquid crystal element 8 at an OFF state, thereby becoming light rays linearly polarized in a direction perpendicular to the page of FIG. 9. The linearly polarized light rays are reflected from the respective layers depending on its wavelength, and then transmitted through the liquid crystal element 8 and polarizer 11 and then externally presented. In this way, the background colour is presented on the display screen of the wristwatch. The background colour is typically "white."

When the natural ambient light is used to present the numeric information and the like, the liquid crystal element 8 is turned to the ON state. As represented by an arrow Q, light rays linearly polarized in a direction parallel to the page of FIG. 9, out of the external light, are picked out by the polarizer 11, and are transmitted through the liquid crystal element 8. Since the liquid crystal element 8 is at an ON state, the linearly polarized light rays keep their polarization direction parallel to the page of FIG. 9 without being twisted, and are thus transmitted through the polarizing splitter film 12, and irregularly reflected on the surface of the back light 28. The irregular reflection reduces the amount of light returning back to the polarizer 11, and the corresponding area is recognised as relatively greyer or darker than the background colour from the outside, and the viewer recognises it as numeric information and the like.

As described above, numeric information and the like are presented in a darker colour against the white background as in a typical case where the natural ambient light is used.

(The mode in which the back light 28 is used)

When the back light 28 is used for presentation under dark night-time conditions, particularly to present the background colour, the back light 28 is lit and the liquid crystal element 8 is turned to an OFF state. As represented by an arrow C, light rays linearly polarized in a direction parallel to the page of FIG. 9, out of the emission of the back light 18, namely random polarized light are picked out by the polarizing splitter film 12, and are twisted by 90° in polarization direction by the liquid crystal element 8 at an OFF state, thereby becoming light rays linearly polarized in a direction perpendicular to the page of FIG. 9. These linearly polarized light rays are prevented from exiting outward as a result of being absorbed or dispersed by the polarizer 11, and are recognised as a "black" background colour from the outside. Although the back light 28 emits yellowish green, red and orange colours respectively in the areas S1, S2, and S3 shown in FIG. 11, the colours recognised as the background colour from the outside are all "black."

When the emission of the back light 28 is used to present numeric information and the like, the back light 28 is lit and the liquid crystal element 8 is turned to an ON state. As represented by an arrow D, light rays linearly polarized in a direction parallel to the page of FIG. 9, out of the emission of the back light 18, are picked out by the polarizing splitter film 12, are transmitted through the liquid crystal element 8 at an ON state and then the polarizer 11, and are then presented externally. Since the colour of the numeric information and the like is determined by the emission colour of the back light 28, the information in the area R1 shown in FIG. 5 is presented in the emission colour of the emission area S1, namely yellowish green; the information in the area R2 is presented in the emission colour of the emission area S2, namely red; and the information in the area R3 is presented in the emission colour of the emission area S3, namely orange.

As described above, time and other alphanumeric information are presented in each of yellowish green, red, and orange against the black background when the emission of the back light 28 is used.

As described above, the wristwatch of the present invention presents the information in black against the white background when the natural ambient light is used, and the information is presented in colour like yellowish green against the black background when the back light 28 is used. In the conventional wristwatch shown in FIG. 21, the information is presented in black against the white background regardless of whether the natural ambient light or the back light is used, and compared with the conventional wristwatch, the mode of display in which the colour of the numerical information and the like is switched between yellowish green or other colour and the standard black depending on whether the back light 28 is lit or extinguished is novel and appealing to the viewer.

The presented information is conventionally difficult to see when it is presented in black against the white background during the night-time, but in this embodiment, the information is easily recognised because the information is presented in yellowish green or another colour against the black background with the back light 28 lit.

The mode of display of this embodiment is useful when a warning is displayed on a diver's watch. More specifically, the back light 28 may be set to emit an eye-catching colour light, for example, yellow light, and when the situation in water pressure and diving time creates the need for a warning, the back light 28 emits yellow light to give a yellow warning display against the black background, thereby effectively alerting the diver of the situation.

When the white background is presented based on the ambient light in the conventional watch shown in FIG. 21, the external light, when going and returning, is transmitted through the polarizer 53 twice as represented by the arrow P. When the external light is transmitted through the polarizer 53 twice, the luminance of the white background drops, darkening the display on the wristwatch. In the wristwatch of this embodiment, the white background is presented taking advantage of the natural ambient light that is reflected from the polarizing splitter film 12 as represented by the arrow P in FIG. 9, and the amount of light absorbed by the polarizer is reduced, and the white background is brightly presented. This arrangement presents a distinctly recognisable display to aged people who typically has low vision.

(Modifications)

FIG. 12 shows a modification of the back light as the light emitting means. A back light 28A shown here has an emission area S1 constructed of EL 19a emitting a yellowish green light, an emission area S2 constructed of EL 19b emitting a red light, and an emission area S3 constructed of EL 19c emitting an orange light. According to this modification, some or all of the emission areas S1, S2 and S3 are allowed to emit selectively lights, thereby diversifying the mode of display.

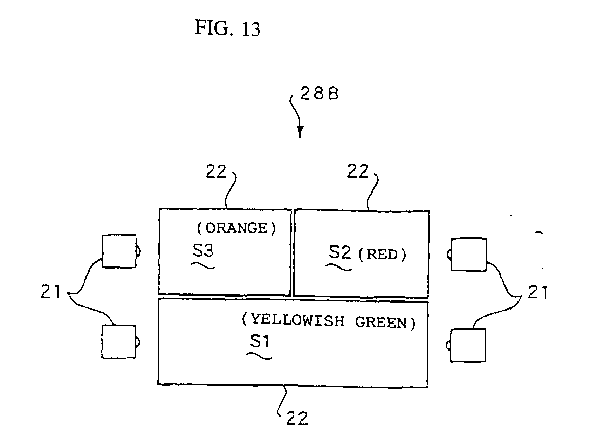

FIG. 13 shows another modification of the back light as the light emitting means. A back light 28B is constructed of LED 21 as point light sources, and plastic light guide plates 22. The light guide plates 22 have respective prints on their emission surfaces for emitting yellowish green, red and orange lights, respectively. The light emission areas S1, having an area larger than each of the emission areas S2 and S3, is provided with LED 21 on both ends of the respective light guide plate 22 to result in strong and uniform light emission over its wide area. A light reflector plate is preferably arranged on each side of the light guide plate 22, except for the side where the light is introduced from LED 21.

(Other embodiments)

Although the preferred embodiments of the electronic watch have been discussed, the present invention is not limited to these embodiment, and various other embodiments are possible within the scope of the invention defined by the claims.

In the above discussion, a plurality of light transmissive prints are formed on the white light source or a plurality of light sources emitting different colour lights are arrayed to partition the emission from back lights 28 (FIGS. 9 and 11), 28A (FIG. 12), and 28B (FIG. 13) into a plurality of colour lights. Alternatively, the emission layers S1, S2, and S3 shown in FIG. 9 are removed from the back light 28 to form it as a single white light source, and then a plurality of colour filters are arranged on the emission surface of the back light 28 for transmitting selectively different colour lights. The colour pattern of the colour filter is relatively flexibly made, and if the back light is colour separated using the colour filter, the colour separation pattern of the back light is flexibly set to meet the display screen of the electronic watch even if its design is complex.

In the above embodiments, the present invention is implemented in the wristwatch, but the present invention may be implemented in other types of electronic watch such as a stopwatch.

In the above embodiments, the liquid crystal element using the TN liquid crystal is used as the polarization axis varying means that switches between the state in which the polarization axis of the polarized light ray is varied and the state in which the polarization axis of the polarized light ray is not varied, and instead of this liquid crystal, the liquid crystal element using the STN liquid crystal or ECB liquid crystal may be used.

In the above embodiments, the multi-layered structure into which a plurality of films are laminated as shown in FIG. 2 is used as the second polarizing splitter means which is a constituting element, namely, as polarizing splitter means for transmitting a light ray linearly polarized in one direction and reflecting a light ray linearly polarized in a direction perpendicular to the one direction. Instead, the second polarizing splitter means may be one of (1) a polarizing splitter having a cholesteric liquid crystal with a (1/4) $\lambda$ plate on one side or on both sides, (2) a polarizing splitter member for splitting a light into a reflected polarized light and a transmitted polarized light taking advantage of the Brewster's angle (SID 92 DIGEST, pages 427 to 429) and (3) a polarizing splitter member employing the hologram.

(Fifth embodiment)

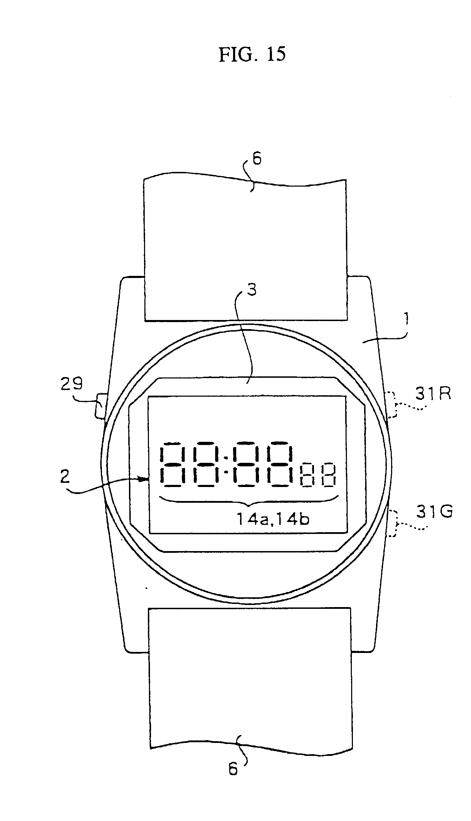

FIG. 15 shows a fifth embodiment of the electronic watch of the present invention. The internal structure of the electronic watch in cross section remains unchanged from that shown in FIG. 4, and its cross-sectional view and related description are therefore omitted here.

The wristwatch of the fifth embodiment comprises a case 1, an assembly 2 housed in the inside of the case 1, a glass cover 3 arranged above the assembly 2 and secured to the case 1, and a wrist strap 6 secured to the case 1.

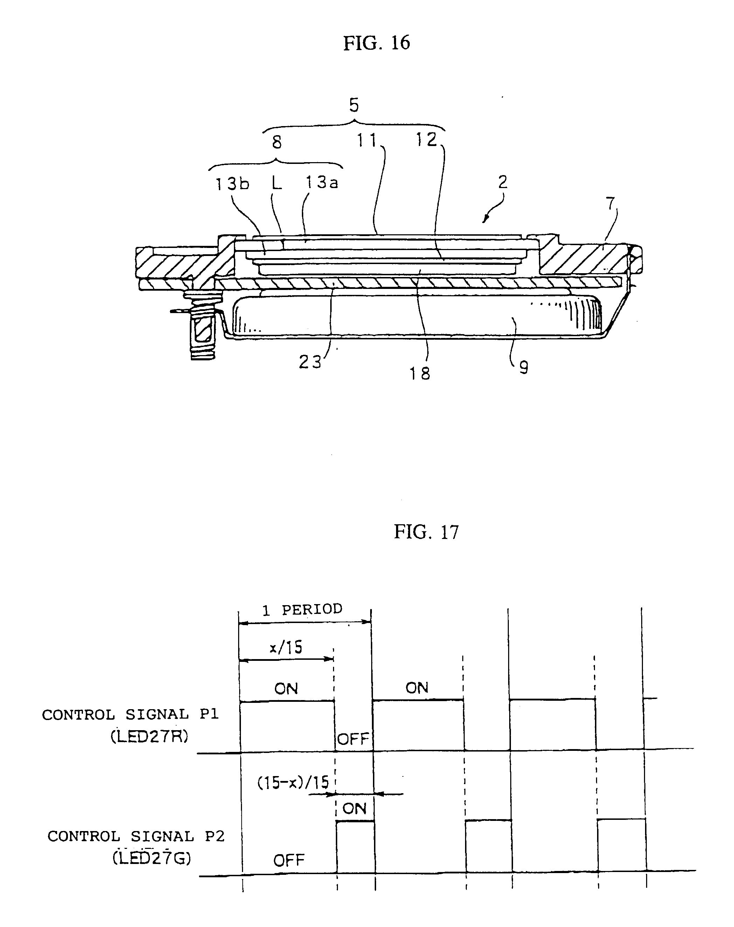

Referring to FIG. 16, the assembly 2 comprises a panel frame 7, a liquid crystal element 8 as polarization axis varying means supported by the panel frame 7, a polarizer 11 as first polarizing splitter means glued onto the surface, facing the viewer, (top surface in FIG. 16) of the liquid crystal element 8, a polarizing splitter film 12 as second polarizing splitter means opposed to the polarizer 11 with the liquid crystal element 8 interposed therebetween, a back light 18 as light emitting means arranged on the underside of the polarizing splitter film 12, a circuit board 23 arranged on the underside of the back light 18, and a battery 9. In this embodiment, a liquid crystal cell 5 is constituted by the liquid crystal element 8, first polarizer 11 and polarizing splitter film 12.

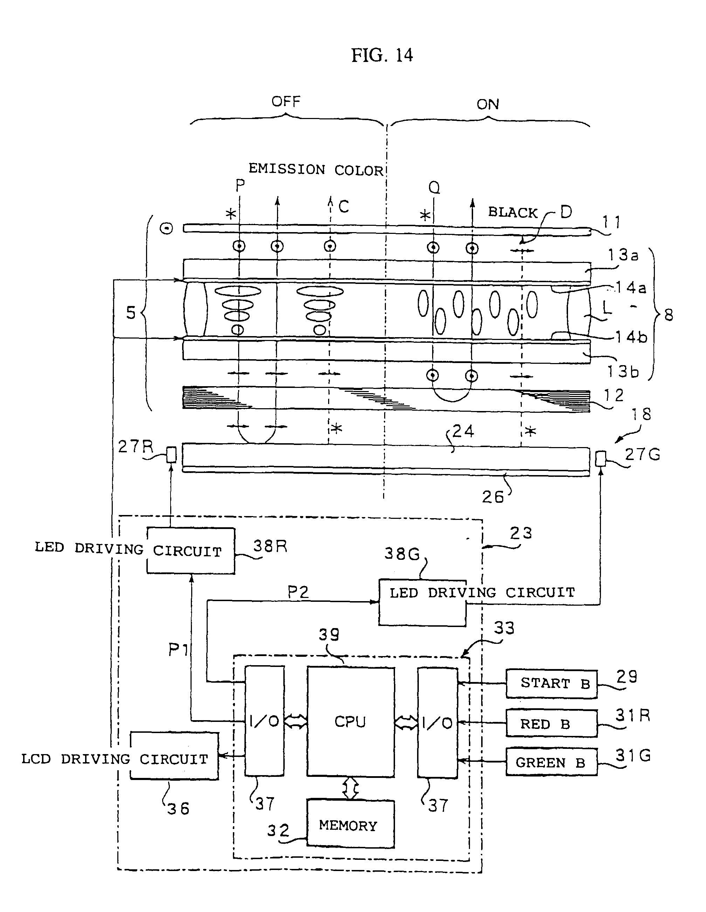

As shown in FIG. 14, the liquid crystal element 8 comprises a pair of opposing light transmissive substrates, for example, transparent glass substrates 13a and 13b, and a liquid crystal, for example, a TN (Twisted Nematic) liquid L filling the gap between the two glass substrates. Arranged on the inside surfaces of the glass substrates 13a and 13b are light transmissive electrodes 14a and 14b, respectively. In this embodiment, the light transmissive electrodes 14a and 14b are constructed of an array of six digits, each digit being a seven-segment pattern. Some of these segments are selectively coloured to present numbers for time display. Although any information besides numeric information is presented, no further discussion about this is provided here.

Referring to FIG. 14, a light emitting device 18 comprises a light guide plate 24, a light reflector plate 26 attached to the underside of the light guide plate 24, LED (Light Emitting Diode) 27R as a light source arranged on one side end face of the light guide plate 24, and LED 27G arranged on the other side end face of the light guide plate 24. LED 27R emits a red light, and LED 27G emits a green light. A plurality of LED 27R and a plurality of LED 27G are respectively arranged along both end faces of the light guide plate 24, namely in perpendicular to the page of FIG. 14.

The polarizer 11 arranged on the surface, facing the viewer, of the liquid crystal element 8 transmits a light ray linearly polarized in one direction while not transmitting the remaining polarized light rays by absorbing or dispersing them. The polarizing splitter film 12 arranged on the rear surface, with respect to the viewer, of the liquid crystal element 8, is a polarizing splitter film having a structure into which a number of films are laminated as shown in FIG. 2. As already described, the polarizing splitter film 12 transmits a light ray linearly polarized in one direction while not absorbing but reflecting the remaining polarized light rays, particularly, totally reflecting the light ray linearly polarized in a direction perpendicular to the polarization axis of the linearly polarized light ray in the one direction.

The circuit board 23 shown in FIG. 16 comprises various circuit components, as shown in FIG. 14, such as a controller 33 including a CPU (Central Processor Unit) 39, an input/output interface 37 and a memory 32, an LED driving circuit 38R for driving LED 27R, an LED driving circuit 38G for driving LED 27G, and an LCD driving circuit 36 for selectively applying an ON voltage and an OFF voltage between the light transmissive electrodes 14a and 14b.

CPU 39 feeds a control signal P1 to the LED driving circuit 38R, and a control signal P2 to the LED driving circuit 38G. The LED driving circuit 38R feeds a current to LED 27R to cause it to emit a red light when the control signal P1 is an ON pulse. The LED driving circuit 38G feeds a current to LED 27G to cause it to emit a green light when the control signal P2 is an ON pulse. The frequency of the two control signals P1 and P2 is 100 Hz or higher. According to an experiment, time display is free from flickering with a frequency set to 100 Hz or higher.

CPU 39 controls the lighting of LED 27R and LED 27G under the program stored in the memory 32, and in this embodiment, varies the duty factor of the current supplied to each LED to modify colour gradation for time display to multi-level colour gradation, for example, to 16 levels of colour gradation. The duty factor here means the ratio of the duration of the ON time to one full period as shown in FIG. 17, and is expressed by the following equation.

$$\text{Duty factor} = (\text{ON time/one period}) \times 100 \ (\%)$$

In this embodiment as shown in FIG. 17, LED 27R is lit on an earlier portion of one period while LED 27G is lit on an later portion of one period. To achieve 16 levels of colour gradation, the duty factor for each of LED 27R and LED 27G needs to be changed in 16 levels, and in FIG. 17, the duty factor of LED 27R is defined by $x/15$ while the duty factor of LED 27G is defined by $(15-x)/15$ ($x$ is an integer within a range of $0 \leq x \leq 15$).

The operation of the electronic watch thus constructed is now discussed. The electronic watch has two light source modes: in one mode, the emission of the back light 18 is used, and in the other mode, the natural ambient light is used without using the emission of the back light 18.

(The mode in which the natural ambient light is used)

When the natural ambient light is used for display under light daylight conditions, as shown by an arrow P in an area where the OFF voltage is applied to the liquid crystal element 8 as shown FIG. 14 light rays linearly polarized in a direction parallel to the page of FIG. 14, out of the natural ambient light are transmitted through the polarizer 11 and are twisted by 90° in polarization direction by the liquid crystal element 8 at an OFF state, thereby becoming light rays linearly polarized in a direction perpendicular to the page of FIG. 14. The linearly polarized light rays are then transmitted through the polarizing splitter film 12, then reach the surface of the light guide plate 24, are reflected from the surface of the light guide plate 24, and are transmitted through the polarizing splitter film 12, liquid crystal element 8 and polarizer 11, and are then externally presented. The viewer thus recognises the colour light reflected from the light guide plate 24 as the background colour of the time display.

In an area where the ON voltage is applied to the liquid crystal element 8, as represented by an arrow Q, light rays linearly polarized in a direction perpendicular to the page of FIG. 14, out of the external light, are picked out by the polarizer 11, and are transmitted through the liquid crystal element 8 without being twisted in polarization direction. The linearly polarized light rays are reflected from the respective interlayer faces of the polarizing splitter film 12 depending on their wavelengths, and then transmitted through the liquid crystal element 8 and polarizer 11 and then externally presented. The viewer recognises the colour light reflected from the polarizing splitter film 12 as the time display of numeric information and the like. Specifically, the numeric information and the like are recognised by the contrast between the colour light reflected from the light guide plate 24 and the colour light reflected from the polarizing splitter film 12.

(The mode in which the emission of the light emitting device is used)

An emission start button 29 in FIG. 15 is pressed when the viewer wants to see a bright display under dark nighttime conditions or to enjoy a special mode of display different from a standard display. CPU 39 shown in FIG. 14 operates to instruct LED 27R and/or LED 27G to light for the back light 18 to emit lights. In this state, in the area where the OFF voltage is applied to the liquid crystal element 8, as represented by an arrow C, light rays linearly polarized in a direction parallel to the page of FIG. 14, out of the emission of the back light 18, namely random polarized light, are picked out by the polarizing splitter film 12, are twisted in polarization axis by 90° by the liquid crystal element 8 at an Off state, become light rays linearly polarized in a direction perpendicular to the page of FIG. 14, and are transmitted through the polarizer 11 to be recognised from outside by the viewer. The viewer recognises the emission colour of the light emitting device 18 as the background colour for the time display. In this embodiment, a new method is implemented in the emission colour, but more discussion on this will be given later.

In the area where the ON voltage is applied to the liquid crystal element 8, as represented by an arrow D, light rays linearly polarized in a direction parallel to the page of FIG. 14, out of the emission of the light emitting device 18, are picked out by the polarizing splitter film 12, and are transmitted through the liquid crystal element 8 at an ON state. These linearly polarized light rays are prevented from exiting outward as a result of being absorbed or dispersed by the polarizer 11, and are externally recognised as "black" by the viewer.

Through the above process, the viewer sees the emission colour of the light emitting device 18 as the background colour and the numeric information in black against the background colour. Specifically, the viewer recognises the numeric information and the like based on the contrast between the emission colour of the light emitting device 18 and black. Since a special method is implemented in the emission colour of the light emitting device 18 as below, the viewer can enjoy a novel time display different from an ordinary one.

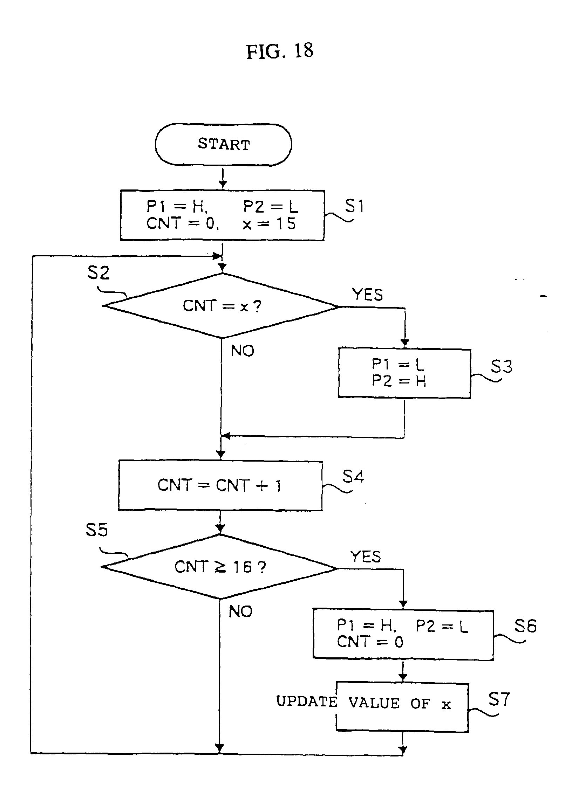

When the emission start button 29 is pressed in FIG. 15, CPU 39 in FIG. 14 executes the process illustrated by a flow diagram shown in FIG. 18 under the control of the program stored in the memory 32. More specifically, in step S1, CPU 39 drives the control signal P1 to "H", the control signal P2 to "L", a counter CNT to an initial value = 0, and the value x determining the duty factor to an initial value = 15.

The process is repeated in the step order of step S2 → step S4 → step S5 → step S2. In the repeated processes, the count value is incremented by 1 in step S4 until it is "15", and when it is "15", it is determined in step S2 that the answer is YES, and the process goes to step S3, where the control signal P1 is driven to "L" and the control signal P2 to "H". In step S4, the count value is incremented to "16" and it is determined in step S5 that the answer is YES, and the process goes to step S6, where the control signal P1 is driven to "H", the control signal P2 is driven to "L" and the count value is cleared to "0".

As a result of the above processes, LED 27R is driven at a duty factor of 15/15 while LED 27G is driven at a duty factor of 0/15, and thereby 100% of the emission is red at a first level of gradation in [Table 1] incorporated while the counting is repeated for a time duration of from 0 second ~ 0.25 second. In step S7, the duty factor is changed from x=15 to x=14.

In the same manner as described above, the process is repeated in the step order of step S2 → step S4 → step S5 → step S2 until the counter CNT is CNT=x(14) in step S2. When the counter CNT is CNT=x(14), the control signal P1 is driven to "L" while the control signal P2 is driven to "H" in step S3, and this state continues until the count value is incremented to "16" in step S4.

As a result of the above processes, LED 27R is driven at a duty factor of 14/15 while LED 27G is driven at a duty factor of 1/15, and thereby 94% of the emission is red while 6% is green at a second level of gradation in [Table 1] while the counting is repeated for a time duration from 0.25 second ~ to 0.5 second.

The same process is repeated thereafter, and for a time duration from 1.75 seconds ~ to 2.0 seconds, a colour mixture is provided with 50% red and 50% green at an eighth level of gradation, namely an orange light is emitted, and further for a time duration from 3.75 seconds ~ 4 seconds, 100% of the emission is green at a sixteenth level of gradation.

The change in colour mixture state, namely level change in colour gradation, from 100% red to 100% green, is performed for four seconds, and as long as an viewer's instruction to stop is not entered, the level change in colour gradation is repeated every four-second cycle. The viewer sees the sequential change in the background colour that cycles through red → orange → green every four-second cycle, and thus enjoys a very pleasant time display.

In the above discussion, the emission of the light emitting device 18 is used for display with the OFF voltage applied to present the background colour, as shown in FIG. 14, and the emission colour is used as the background colour. Alternatively, the polarization direction of the first polarizer 11 is changed by 90° in FIG. 14, the emission colour is used for display when the ON voltage is used to present numeric information and the like.

In this embodiment, the polarizing splitter film 12 having a structure into which many films are laminated as shown in FIG. 2 is used as the second polarizing splitter means arranged on the underside of the liquid crystal element 8, namely on the side of the liquid crystal element 8 opposite to the viewer. Alternatively, the second polarizing splitter means may be an ordinary polarizer having the same optical characteristics as those of the polarizer 11, instead of the polarizing splitter film 12.

When an ordinary polarizer is used as the second polarizing splitter means, the light ray from the light emitting device 18 passes through the polarizer, light rays polarized in directions other than a predetermined direction are absorbed, and the light rays drop in light intensity, darkening the time display and presenting difficult in viewing it.

In the embodiment shown in FIG. 14 where the polarizing splitter film 12 is used as the second polarizing splitter means, the emission of the light emitting device 18 presents the time display as represented by the arrow C, and although the polarized components, other than the linearly polarized light beam transmitted through polarizing splitter film 12, are not directly transmitted through the polarizing splitter film 12, they gradually change their polarization direction in the course of repeated reflection between the polarizing splitter film 12 and the light guide plate 24 of the light emitting device 18, and are finally transmitted through the polarizing splitter film 12 and contribute to the time display. As a result, the time display is substantially brighter than the case where an ordinary polarizer is used.

[Table 1]

| (Relationship between elapsed time and colour) | | | | | | | |
|---|---|---|---|---|---|---|---|
| Gradation | 1 | 2 | ... | 8 | ... | 15 | 16 |
| Time | 0~ 0.25 | 0.25~ 0.5 | ... | 1.75~2.0 | ... ... | 3.5~ 3.75 | 3.75~ 4.0 |
| Con. sig. P1 duty factor (LED 27R) | 15/15 | 14/15 | ... | 8/15 | ... | 1/15 | 0/15 |
| Con. sig. P2 duty factor (LED 27G) | 0/15 | 1/15 | ... | 8/15 | ... | 14/15 | 15/15 |
| Colour | 100% red | 94% red 6% green | ... | orange | ... | 94% green 6% red | 100% green |

(Sixth embodiment)

Since the duty factor is automatically updated in step S7 in FIG. 18 in the fifth embodiment, the background colour of the time display is repeatedly cycled through red → orange → green at regular intervals. Alternatively in the sixth embodiment, the background colour of the time display is manually changed by the viewer.

More specifically, a button for a red colour 31R and a button for a green colour 31G are provided in suitable locations of the side face of the case 1 constituting the electronic watch as shown in FIG. 15, and the outputs of the buttons are connected to CPU 39 via the input/output interface 37 as shown in FIG. 14.

In this embodiment, the memory 32 (shown in FIG. 14) has a predetermined memory location for storing the value x determining the duty factor, and the value x determining the duty factor is updated for a value desired by the viewer in response to the number of pressings of the red button 31R or the green button 31G. The time display is thus presented in any colour in the range red → orange → green as the viewer desires. For example, when the red button 31R is pressed repeatedly many times, the value x increases shifting the display colour to a reddish colour, and when the green button 31G is pressed repeatedly many times, the value x decreases shifting the display colour to a greenish colour. The display colour may be changed depending on the pressing duration of the red button 31R or the green button 31G.

(Seventh embodiment)

In the embodiment shown in FIG. 14, the colour mixture state of red and green in the light emitting device 18 as the light emitting means is changed by changing the ratio of emission colour strengths of LED 27R and LED 27G. Alternatively in this embodiment, a plurality of light sources of different emission colours are arranged, and the colour mixture state is thus changed by varying the emission area of each light source.

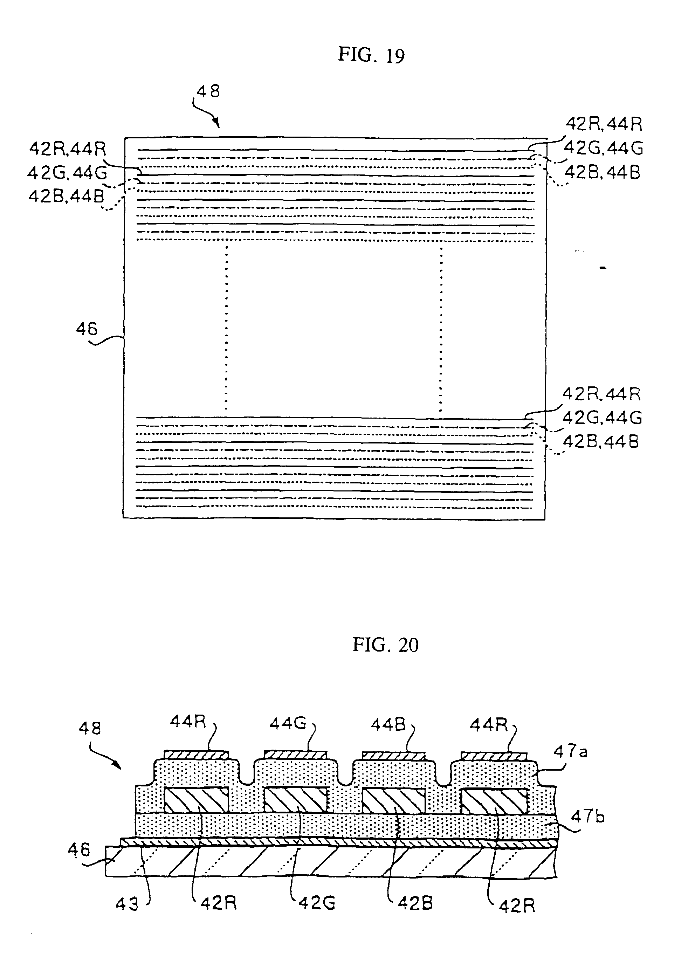

FIG. 20 shows a light emitting device suitable for such a light emission method. The light emitting device 48 comprises, on a glass substrate 46, EL emission layers for emitting different colour lights such as a red EL (Electroluminenscence) emission layer 42R, a green EL emission layer 42G, and a blue EL emission layer 42B, and these emission layers are interposed between a common flat electrode 43 and individual electrodes 44R, 44G and 44R, respectively. Reference characters 47a and 47b designate respectively an insulating layer.

The EL emission layers 42R, 42G and 42B and their corresponding individual electrodes 44R, 44G and 44B are arranged periodically and in parallel, and thus in a comb-like fashion on the glass substrate 46 as shown in FIG. 19. The electrodes 44R, 44G and 44B are connected such that they are supplied with a voltage in a group. To select the electrodes to be supplied with the voltage, the emission area of each of the red EL emission layer 42R, the green EL emission layer 42G, and the blue EL emission layer 42B is individually adjusted, and the colour mixture state of the emission of the light emission device 48 is adjusted as desired to result in a desired emission colour.

By substituting the light emitting device 48 for the light emitting device 18 shown in FIG. 14, the background colour and the numeric information and the like in the time display are presented in a variety of colours. The EL emission layers are not limited to red, green and blue, and in addition to or instead of these colours, yellow, black and other colours may be used. Even with the same colours, the emission layers may be arranged for varying emission strength.

(Other embodiments)

Although the preferred embodiments have been discussed in connection with the electronic watch, the present invention is not limited to these embodiments, and other embodiments are possible within the scope defined by the claims.

In each of the above embodiments, the red light source and the green light source are selected as the light sources of different colour, but any other colour may be selected, and tow or more colours may be selected to be mixed together.

Since the colour mixture state of the different emission colours is varied automatically or manually by the viewer in each of the above embodiments, the viewer can enjoy the time display that varies periodically or as desired. The electronic watch of this invention not only presents the colour mixture state that varies periodically or as desired, but also the colour mixture state fixed. In this case, as well, depending on the mixing method of a plurality of emission colours, the electronic watch presents a display colour appealing to the viewer, and even given the same type of electronic watches, a diversity of different display colours are presented by changing the initial setting in connection with emission conditions.

In the above embodiments, LEDs or ELs are used as the light sources, and alternatively, a white-light lamp may be used.

In the electronic watch as recited in Claim 1, the numeric information and the like are presented in the emission colour of the light emitting means when the emission of the light emitting means is used to present them, and the mode of display for the numeric information and the like is diversified compared with the conventional watch which presents the numeric information in black only. Since the light ray reflected from the second polarizing splitter means is used to present the white background, the drop in luminance arising from light absorption through the polarizer is reduced and a distinct white background results, compared with the conventional art in which the white background is presented by the light ray transmitted through the polarizer.

In an electronic watch according to this invention, a plurality of colour lights emitted from the light emitting means permit the background of the information display screen of the electronic watch to be changed in colour or the numeric information and the like presented on the information display screen to be changed in colour, and as a result, the mode of display is novel and appealing to the viewer.

In an electronic watch according to this invention, the selective light of the colour light sources permit the information display area such as the background and numeric information on the time display to be presented not only in white or black, but also in a desired colour from among a variety of colours, and as a result, the time display is novel and appealing to the viewer. In operative co-operation with a diversity of sensors, like the ones for temperature and pressure, or a timer, the electronic watch may work as a warning indicator for diving conditions on a diver's watch.

**Claims**

**1.** An electronic watch for counting and presenting time, said electronic watch comprising:

first polarizing splitter means which transmits therethrough light ray components linearly polarized in one direction while not transmitting therethrough light ray components linearly polarized in an direction perpendicular to said one direction;

polarization axis varying means, disposed at a position for receiving the linearly polarized light ray transmitted from said first polarizing splitter means, for selecting between a state in which a polarization axis is varied and a state in which the polarization axis is not varied;

second polarizing splitter means, diametrically opposed to said first polarizing splitter means with said polarization axis varying means interposed therebetween, for transmitting light ray components linearly polarized in second direction and reflecting light ray components linearly polarized in a direction perpendicular to said second direction; and

light emitting means for emitting a light ray to said polarization axis varying means through said second polarizing splitter means.

2. An electronic watch according to Claim 1, wherein a semi-transmissive layer is arranged between said second polarizing splitter means and said light emitting means.

3. An electronic watch according to one of Claims 1 and 2, wherein a light scattering layer is arranged between said first polarizing splitter means and said light emitting means.

4. An electronic watch according to one of Claims 1 through 3, wherein said light emitting means emits at least one of orange, red and yellowish green light rays.

5. An electronic watch according to one of Claims 1 through 4, wherein said light emitting means emits multi-colour light rays.

6. An electronic watch according to one of Claims 1 through 5, wherein said light emitting means comprises a colour filter.

7. An electronic watch according to one of Claims 1 through 6, wherein said second polarizing splitter means has a multi-layered structure in which two types of layers are alternately laminated, and wherein two adjacent layers of a plurality of layers are equal to each other in refractive index in one direction, but different from each other in refractive index in a direction perpendicular to said one direction, and wherein the plurality of layers are varied from layer to layer in thickness.

8. An electronic watch according to Claim 5, wherein said light emitting means has a plurality of light sources that emit light rays of different colours.

9. An electronic watch according to Claim 5, wherein said light emitting means has colour filters of a plurality of types that selectively transmit light rays of different colours.

10. An electronic watch comprising a liquid crystal cell that changes the light transmission state of a light ray by changing an applied electric field and light emitting means for emitting a light ray to said liquid crystal cell, wherein said light emitting means comprises light sources of different light colours, on the basis of at least one light source for one colour and wherein said liquid crystal cell comprises first polarizing splitter means which transmits therethrough light ray components linearly polarized in one direction while not transmitting therethrough light ray components linearly polarized in a direction perpendicular to said one direction;

polarization axis varying means, disposed at a position for receiving the linearly polarized light ray transmitted from said first polarizing splitter means, for selecting between a state in which a polarization axis is varied and a state in which the polarization axis is not varied; and

second polarizing splitter means, diametrically opposed to said first polarizing splitter means with said polarization axis varying means interposed therebetween, for transmitting light ray components linearly polarized light in second direction and reflecting light ray components linearly polarized in a direction perpendicular to said second direction.

11. An electronic watch according to Claim 10, wherein emissions of different colours are presented in a colour mixture to a naked-eye vision state.

12. An electronic watch according to one of Claims 10 and 11, wherein the colour mixture state in the colour mixture presentation changes.

**13.** An electronic watch according to Claim 12, wherein the change in the colour mixture state is automatically made at predetermined time intervals.

**14.** An electronic watch according to one of Claims 12 and 13, wherein the change in the colour mixture state is made by changing the emission strength of each colour light source in said light emitting means.

**15.** An electronic watch according to one of Claims 12 and 13, wherein the change in the colour mixture state is made by changing the emission area of each colour light source in said light emitting means.

**16.** An electronic watch according to one of Claims 10 through 15, wherein the light source is one of an electroluminescence, a light emitting diode and a lamp, or a combination of thereof.

FIG. 1

(OFF=BACKGROUND COLOR)    (ON=NUMERICS AND THE LIKE)

(WHITE)                    (DARK COLOR) (EMISSION COLOR)

P                          Q                      D

(BLACK)

ON=STRAIGHT                                       13a
OFF=TWISTED                                    L  }8
                                                 13b

⊙ REFLECTED

← TRANSMITTED

12

18

FIG. 2

FIG. 3

FIG. 4

FIG. 5

FIG. 6

FIG. 7

FIG. 8

FIG. 9

(OFF=BACKGROUND COLOR) | (ON=NUMERICS AND THE LIKE)

(WHITE) | (DARK COLOR) (EMISSION COLOR)

P

(BLACK)

ON=STRAIGHT

OFF=TWISTED

13a

L  } 8

13b

⊙ REFLECTED

← TRANSMITTED

S₁.S₂.S₃

28

FIG. 10

FIG. 11

28

| (ORANGE) S3 | S2 (RED) |
|---|---|
| (YELLOWISH GREEN) S1 | |

FIG. 12

28A

| 19c (ORANGE) S3 | S2 (RED) 19b |
|---|---|
| S1 (YELLOWISH GREEN) | |

19a

FIG. 13

28B

22

22

(ORANGE)

S3

S2 (RED)

21

21

(YELLOWISH GREEN)

S1

22

FIG. 14

FIG. 15

FIG. 16

FIG. 17

CONTROL SIGNAL P1
(LED27R)

1 PERIOD

x/15

ON          ON

OFF

(15−x)/15

ON

CONTROL SIGNAL P2
(LED27G)

OFF

## FIG. 18

```
                    ┌─────────────┐
                    │    START    │
                    └─────────────┘
                           │
                           ▼
              ┌────────────────────────┐
              │ P1 = H,    P2 = L       │ ～ S1
              │ CNT = 0,   x = 15       │
              └────────────────────────┘
                           │
                           ▼
   S2 ～       ◇─────────────────────◇  YES
              │      CNT = x ?        │────────┐
               ◇─────────────────────◇        │
                           │ NO               ▼
                           │          ┌──────────────┐
                           │          │  P1 = L      │ ～ S3
                           │          │  P2 = H      │
                           │          └──────────────┘
                           │                  │
                           ◄──────────────────┘
                           ▼
              ┌────────────────────────┐
              │    CNT = CNT + 1        │ ～ S4
              └────────────────────────┘
                           │
                           ▼
   S5 ～       ◇─────────────────────◇  YES
              │     CNT ≧ 16 ?        │────────┐
               ◇─────────────────────◇        │
                           │ NO               ▼
                           │          ┌──────────────────────┐
                           │          │ P1 = H,   P2 = L      │ ～ S6
                           │          │ CNT = 0               │
                           │          └──────────────────────┘
                           │                  │
                           │                  ▼
                           │          ┌──────────────────────┐
                           │          │ UPDATE VALUE OF x     │ ～ S7
                           │          └──────────────────────┘
                           │                  │
                           ▼                  ▼
```

## FIG. 19

## FIG. 20

FIG. 21